(19) Europäisches Patentamt
European Patent Office
Office européen des brevets

(11) **EP 2 524 388 B1**

(12) **EUROPÄISCHE PATENTSCHRIFT**

(45) Veröffentlichungstag und Bekanntmachung des Hinweises auf die Patenterteilung:
**16.04.2014  Patentblatt 2014/16**

(21) Anmeldenummer: **11700532.2**

(22) Anmeldetag: **13.01.2011**

(51) Int Cl.:
***H01H 47/32*** *(2006.01)*    ***H01H 50/44*** *(2006.01)*

(86) Internationale Anmeldenummer:
**PCT/EP2011/050367**

(87) Internationale Veröffentlichungsnummer:
**WO 2011/086113 (21.07.2011 Gazette 2011/29)**

(54) **ELEKTRISCHES BAUELEMENT UND VERFAHREN ZUM STEUERN EINES ELEKTRISCHEN BAUELEMENTES**

ELECTRICAL COMPONENT AND METHOD FOR CONTROLLING AN ELECTRICAL COMPONENT

COMPOSANT ÉLECTRIQUE ET PROCÉDÉ POUR COMMANDER UN COMPOSANT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2010  DE 102010029228**
**14.01.2010  DE 102010000883**
**14.01.2010  DE 102010000887**

(43) Veröffentlichungstag der Anmeldung:
**21.11.2012  Patentblatt 2012/47**

(73) Patentinhaber: **Robert Bosch GmbH**
**70442 Stuttgart (DE)**

(72) Erfinder:
• **SCHUELER, Harald**
**71522 Backnang (DE)**
• **HARTMANN, Sven**
**70439 Stuttgart (DE)**
• **TUMBACK, Stefan**
**70469 Stuttgart (DE)**

(56) Entgegenhaltungen:
**US-A- 3 441 810    US-A- 5 909 352**

EP 2 524 388 B1

**Beschreibung**

Stand der Technik

Die vorliegende Erfindung betrifft das Gebiet der elektronischen Bauelemente mit induktiven Lasten, wie beispielsweise Elektromagnete, Relais oder Transformatoren.

Solche elektrischen Bauelemente haben Wicklungen, die auf Kernen angeordnet sind. Ein Beispiel für eine sehr hohe induktive Last ist das Schalt- und Einrückrelais eines Starters oder Anlassers eines Verbrennungsmotors eines Kraftfahrzeuges.

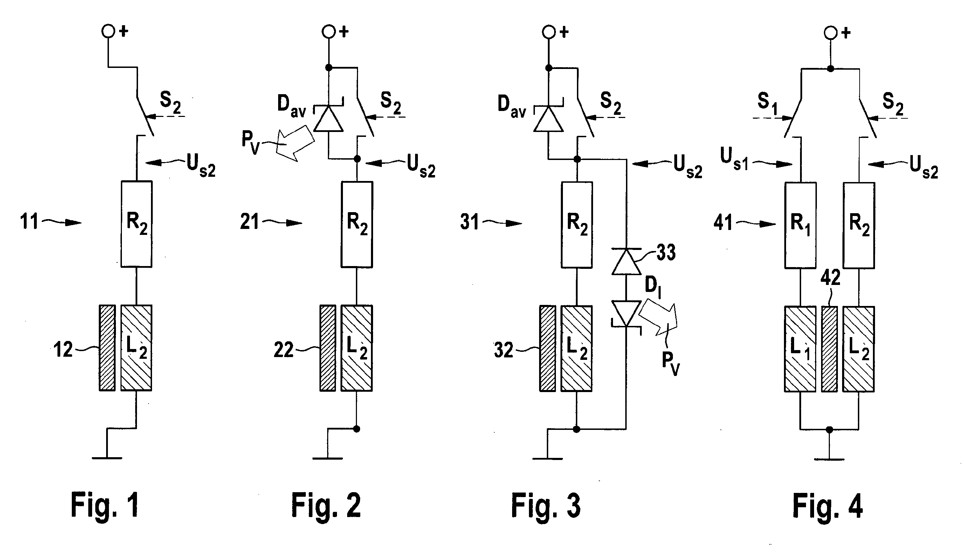

Dazu zeigt Fig. 1 eine schematische Ansicht eines ersten Ausführungsbeispiels eines elektrischen Bauelements 11 nach dem Stand der Technik. Das Bauelement 11 hat eine Wicklung $L_2$, $R_2$, die um einen Kern 12 angeordnet ist. Aus Gründen der Übersichtlichkeit und der Kongruenz der Figuren mit den nachfolgenden Gleichungen sind vorliegend viele in den Figuren gezeigten Bauteile über ihre charakteristischen Werte bezeichnet. Beispielsweise ist die Wicklung $L_2$, $R_2$ mittels ihrer Induktivität $L_2$ und ihres Widerstandes $R_2$ referenziert.

Weiter hat das elektrische Bauelement 11 einen Schalter $S_2$ zum Schalten der Wicklung $L_2$, $R_2$. Beim·Abschalten der Wicklung $L_2$, $R_2$ mittels des Schalters $S_2$ fällt eine Schalterspannung $U_{S2}$ an dem Schalter $S_2$ ab. Werden wie in Fig. 1 keine Maßnahmen für das Löschen der induktiven Last der Wicklung $L_2$, $R_2$ beim Abschalten getroffen, so sinkt das Potenzial $U_{S2}$ beim Abschalten so weit ab, dass dort entweder ein Lichtbogen oder ein Avalanche-Durchbruch auftritt.

Als Ersatzschaltbild hierzu zeigt Fig. 2 eine schematische Ansicht eines zweiten Beispiels des erfindungsgemäßen elektrischen Bauelements 21. Das elektrische Bauelement 21 hat wie in Fig. 1 eine Wicklung $L_2$, $R_2$ um den Kern 22 und einen Schalter $S_2$. Zur Illustrierung des mit Bezug zu Fig. 1 erläuterten Effektes des Lichtbogens oder des Avalanche-Durchbruches ist in Fig. 2 eine Zener-Diode $D_{av}$ gezeichnet. Weiter zeigt in Fig. 2 das Bezugszeichen $P_v$ die Durchschlagsleistung beim Abschalten des Schalters $S_2$. Der Effekt des Durchbruches ist regelmäßig sehr schädlich für das schaltende Bauelement 21 und kann zu dessen Zerstörung führen. Aus diesem Grunde werden Schutzbeschaltungen vorgesehen.

Hierzu zeigt Fig. 3 eine schematische Ansicht eines dritten Beispiels eines elektrischen Bauelements 31 nach dem Stand der Technik. Das elektrische Bauelement 31 ist wie die elektrischen Bauelemente 11 und 21 der Fig. 1 und 2 aufgebaut und hat demnach eine Wicklung $L_2$, $R_2$ um einen Kern 32 und einen Schalter $S_2$. Dabei hat auch das elektrische Bauelement 31 die mit Fig. 2 beschriebene Zener-Diode $D_{av}$. Eine Form einer Schutzbeschaltung ist die in Fig. 3 dargestellte Freilaufdiode 33. Diese Freilaufdiode 33 ist zur Erhöhung der Löschspannung noch in Serie mit einer Zener-Diode $D_{loesch}$ geschaltet. Je höher die Zenerspannung ist, desto rascher kann die Energie der induktiven Last entzogen werden. Allerdings muss die Summe aus dem Abfall der Diodenspannung und der Zenerspannung geringer als die Durchschlagsspannung des Schalters $S_2$ bleiben, sonst ist die Zerstörung des Bauelementes 31 wahrscheinlich.

Des Weiteren müssen solche Bauelemente, wie Relais, Elektromagnete oder Transformatoren, bei hohen Energiemengen und kurzer Abschaltzeit sehr hohe Verlustleistungen ertragen können. Dies wird insbesondere dann kritisch, wenn häufige Schaltvorgänge auftreten. Ein Beispiel für häufig auftretende Schaltvorgänge ist eine getaktete oder geregelte Ansteuerung des elektrischen Bauelementes.

Eine solche geregelte oder stromgeregelte Ansteuerung mit Hilfe einer Zweipunktregelung oder einer Pulsweitenmodulation kommt beispielsweise dann zum Einsatz, wenn zunächst ein hoher Einzugsstrom, zum Beispiel beim Einzug eines Magneten, bzw. ein hoher Einschaltstrom fließen soll, der später abgesenkt werden soll, zum Beispiel zum Halten eines Magneten. Beim Anschalten wird voll durchgeschaltet, wohingegen beim Halten wechselnde Schaltvorgänge erfolgen. Eine weitere herkömmliche Möglichkeit, ein solches Verhalten zu bewerkstelligen, ist die Aufteilung in eine Einschaltwicklung und eine Haltewicklung. Dazu zeigt die Fig. 4 eine schematische Ansicht eines vierten Ausführungsbeispiels eines elektrischen Bauelementes 41 nach dem Stand der Technik. Dabei hat das elektrische Bauelement 41 zwei Windungen $L_1$, $R_1$ und $L_2$, $R_2$, die auf einem gemeinsamen Kern 42 gewickelt sind. Zum Schalten der ersten Wicklung $L_1$, $R_1$ ist ein erster Schalter $S_1$ vorgesehen. Analog ist zum Schalten der zweiten Wicklung $L_2$, $R_2$ ein zweiter Schalter $S_2$ vorgesehen. Die an den Schaltern $S_1$ und $S_2$ beim Schaltvorgang abfallenden Spannungen sind mit $U_{S1}$ und $U_{S2}$ bezeichnet. Beispielsweise kann die erste Windung $L_1$, $R_1$ als eine Haltewicklung ausgebildet sein. Dann kann die zweite Wicklung $L_2$, $R_2$ als eine Einschaltwicklung ausgebildet sein. Dabei wird die Einschaltwicklung $L_2$, $R_2$ so ausgelegt, dass der erforderliche rasche Einzug mit typischerweise relativ hohen Strömen der Einschaltwicklung $L_2$, $R_2$ realisiert wird. Danach kann auf die Haltewicklung $L_1$, $R_2$ umgeschaltet werden, die einen deutlich geringeren Strombedarf aufweist ($R_1 \gg R_2$). Ein solches Bauelement wie in Fig. 4 ist beispielsweise aus herkömmlichen Starterrelais bekannt.

Weiterhin werden Kondensatoren als Schnelllöschungselemente oder Speicherelementen eingesetzt. Damit kann die Energie einerseits schnell dem Magnetkreis entzogen werden und andererseits kann Energie zum Boosten für eine kurze Ansprechzeit beim Einschalten zur Verfügung gestellt werden.

Da induktive Lasten in bestimmten Fällen sehr hohe Energiemengen speichern können, zum Beispiel Starterrelais bis in den Bereich von 1 Joule, können der Aufwand und die Kosten für Schutzbeschaltungen relativ hoch werden.

Das Dokument US 5 909 352 offenbart ein Bauelement gemäss dem Oberbegriff des Anspruchs 1.

Offenbarung der Erfindung

Die Erfindung basiert auf der Erkenntnis, dass die beim Abschalten auftretende induktive Last einer Arbeitswicklung auf einfache Weise und kostengünstig über einen Löschkreis mit einer zusätzlichen Wicklung gelöscht werden kann. Dabei ist die zusätzliche Wicklung oder Löschwicklung auf den gleichen Kern, insbesondere ferromagnetischen Kern, wie die Arbeitsspule gewickelt oder angeordnet.

Der Zeitpunkt des Abschaltens der Arbeitswicklung triggert das Einschalten des Löschkreises und damit das Aktivwerden der Löschwicklung zum Löschen der induktiven Last der Arbeitsspule.

Demgemäß wird ein elektronisches Bauelement vorgeschlagen, welches einen Kern, eine erste Wicklung und eine zweite Wicklung aufweist. Dabei sind sowohl die erste Wicklung als auch die zweite Wicklung um den Kern angeordnet, insbesondere gewickelt. Die zweite Wicklung ist mittels eines Schalters ein- und ausschaltbar. Bei einem Abschalten der zweiten Wicklung mittels des Schalters wird die erste Wicklung über einen Löschkreis zum Löschen der induktiven Last der zweiten Wicklung kurzgeschlossen. Damit wirkt die erste Wicklung als Löschwicklung für die vorzugsweise als Arbeitswicklung des elektrischen Bauelementes ausgebildete zweite Wicklung.

Des Weiteren wird ein Starter oder ein Startersystem für ein Kraftfahrzeug vorgeschlagen, welcher ein wie oben erläutertes elektrisches Bauteil aufweist. Das Startersystem kann ferner einen Startermotor umfassen.

Ferner wird ein Verfahren zum Steuern eines elektrischen Bauelements mit einem Kern, einer um den Kern angeordneten ersten Wicklung, einer um den Kern angeordneten zweiten Wicklung und einem Schalter zum Ein- und Ausschalten der zweiten Wicklung vorgeschlagen, mit dem Schritt des Kurzschließens der ersten Wicklung über einen Löschkreis zum Löschen der induktiven Last der zweiten Wicklung bei einem Abschalten der zweiten Wicklung.

In den Unteransprüchen finden sich vorteilhafte Weiterbildungen und Ausgestaltungen des in Anspruch 1 angegebenen elektrischen Bauelements.

Gemäß einer bevorzugten Weiterbildung ist die zweite Wicklung als Arbeitswicklung des elektrischen Bauelementes ausgebildet. Die erste Wicklung ist als Löschwicklung zum Löschen der induktiven Last der Arbeitswicklung ausgebildet. Damit kann die erste Wicklung die induktive Last der Arbeitswicklung (zweite Wicklung) auf einfache und kostengünstige Weise löschen. Eine weitere eigens vorzusehende Schutzbeschaltung für das Bauelement ist damit vorteilhafterweise nicht notwendig.

Gemäß einer weiteren bevorzugten Weiterbildung ist der Löschkreis als ein Kurzschlusskreis aus einer Serienschaltung der ersten Wicklung und einem Schließwiderstand ausgebildet. Die erste Wicklung hat eine bestimmte Wicklungszahl, eine bestimmte Induktivität und einen bestimmten Widerstand. Die Ausbildung des Löschkreises als Kurzschlusskreis ist eine sehr einfache schaltungstechnische Lösung für das Löschen der induktiven Last der zweiten Wicklung.

Gemäß einer weiteren bevorzugten Weiterbildung ist die erste Wicklung als eine zu der zweiten Wicklung separat ausgebildete Blindwicklung auf dem gemeinsamen Kern des elektrischen Bauelementes angeordnet. Damit benötigt diese Weiterbildung des erfindungsgemäßen Löschkreises nur zwei zusätzliche Elemente, nämlich die Löschwicklung und den Schließwiderstand.

Gemäß einer weiteren bevorzugten Weiterbildung ist der Löschkreis als eine Parallelschaltung der ersten Wicklung und eines Schließwiderstandes zwischen einem weiteren Schalter zum Schalten der ersten Wicklung und Masse ausgebildet.

Durch die Verwendung des weiteren Schalters ist es vorteilhafterweise möglich, auch die erste Wicklung als Arbeitswicklung zu betreiben. Dabei ist die erste Wicklung vorzugsweise dazu geeignet, bei einem Einschalten mittels dieses weiteren Schalters als Arbeitswicklung zu arbeiten.

Vorzugsweise ist dieser weitere Schalter dazu eingerichtet, die erste Wicklung bei einem Abschalten der zweiten Wicklung mittels des Schalters für die zweite Wicklung einzuschalten.

Im Weiteren wird die Funktionsweise des erfindungsgemäßen elektrischen Bauelementes detailliert erläutert. Im Sinne dieser Erläuterung und der vorliegenden Patentanmeldung bezeichnet $R_1$ den Widerstand der ersten Wicklung, $L_1$ die Induktivität der ersten Wicklung, $n_1$ die Windungszahl der ersten Wicklung, $R_2$ den Widerstand der zweiten Wicklung, $n_2$ die Windungszahl der zweiten Wicklung, $L_2$ die Induktivität der zweiten Wicklung, $R_K$ den Schließwiderstand des Löschkreises, $U_v$ die Versorgungsspannung des elektrischen Bauelements, $U_{av}$ die Durchschlagsspannung des Schalters $S_2$ der zweiten Wicklung und $I_2$ den durch den Widerstand $R_2$ der zweiten Wicklung $L_2$, $R_2$ fließenden Strom.

Dabei wird vorzugsweise das Verhältnis zwischen den Widerständen $R_1$, $R_2$ und den Windungszahlen $n_1$, $n_2$ der ersten und zweiten Wicklungen in Abhängigkeit der am elektrischen Bauteil anliegenden Versorgungsspannung $V_v$ und der Durchschlagsspannung $U_{av}$ des Schalters $S_2$ der zweiten Wicklung derart eingestellt, dass die Durchschlagsspannung $U_{av}$ kleiner als eine Differenzspannung zwischen der Versorgungsspannung $V_v$ und der beim Schaltvorgang am Schalter $S_2$ abfallenden Schalterspannung $U_{S2}$ ist. Der Fluss $\Phi$ im Kern bleibt in dem kleinen Zeitraum des Abschaltens konstant. Demnach ist $I_1 = 0$ und $I_2 \neq 0$ vor dem Abschalten:

$$\Phi = I_2' * n_2 \tag{1}$$

Nach dem Abschalten des Schalters $S_2$ wird $I_2 = 0$ und damit:

$$I_2' = I_2 * n_2 / n_1 \tag{2}$$

Im Löschkreis aus $L_1$, $R_1 + R_K$ nimmt danach der Strom $I_1$ mit der Abklingzeitkonstante $\tau = L_1/(R_K + R_1)$ ab:

$$I_1(t) = I_1' * \exp(-t/\tau) \tag{3}$$

Unmittelbar nach dem Abschalten ist die Stromentnahme am größten:

$$L_1 * dI_1/dt' = -(R_K+R_1) * I_1' \tag{4}$$

Damit die gesamte Energie im Löschkreis abgebaut wird, darf die Differenzspannung zwischen Uv und $U_{S2}$ den Wert der Durchschlagsspannung $U_{av}$ (Lichtbogen- oder Avalanche-Spannung des Schalters $S_2$) nicht überschreiten:

$$U_v - U_{S2} < U_{av} \text{ mit } U_{S2} = d\Phi/dt \approx L_1 * dI_1 / dt \tag{5}$$

Mit den Gleichungen (4) und (3) ergibt sich unmittelbar nach dem Abschalten unten stehende Löschbedingung:

$$(R_K+R_1) * n_2/n_1 > (U_{av}-U_v) / I_2$$

oder

$$(R_K+R_1) / R_2 * n_2/n_1 > (U_{av}-U_v) / U_v$$

Unter Berücksichtigung von $I_{2,max} = UV / R_2$.

Gemäß einer weiteren bevorzugten Weiterbildung ist das elektrische Bauelement als ein Elektromagnet, als ein Relais oder als ein Transformator ausgebildet. Beispiele für ein Relais sind das Schaltrelais oder Einrückrelais eines Starters eines Kraftfahrzeuges.

Gemäß einer weiteren bevorzugten Weiterbildung ist der jeweilige Schalter als ein Feldeffekttransistor (FET) ausgebildet.

Weitere Ausführungsbeispiele der Erfindung sind in den Zeichnungen dargestellt und in der nachfolgenden Beschreibung näher erläutert. Es zeigen:

Fig. 1    eine schematische Ansicht eines ersten Beispiels eines elektrischen Bauteils nach dem Stand der Technik,

Fig. 2    eine schematische Ansicht eines zweiten Beispiels eines elektrischen Bauelements nach dem Stand der Technik,

Fig. 3    eine schematische Ansicht eines dritten Beispiels eines elektrischen Bauteils nach dem Stand der Technik,

Fig. 4          eine schematische Ansicht eines vierten Beispiels eines elektrischen Bauteils nach dem Stand der Technik,

Fig. 5          eine schematische Ansicht eines ersten Ausführungsbeispiels des erfindungsgemäßen Bauelements,

Fig. 6          eine schematische Ansicht eines zweiten Ausführungsbeispiels des erfindungsgemäßen elektrischen Bauelements,

Fig. 7          eine schematische Ansicht eines dritten Ausführungsbeispiels des erfindungsgemäßen elektrischen Bauelements,

Fig. 8          eine schematische Ansicht eines vierten Ausführungsbeispiels des erfindungsgemäßen elektrischen Bauelements,

Fig. 9          ein schematisches Ersatzschaltbild zum erfindungsgemäßen elektrischen Bauelement nach Fig. 5,

Fig. 10         ein schematisches Ersatzschaltbild zum erfindungsgemäßen elektrischen Bauteil nach Fig. 6,

Fig. 11, 12     schematische Ersatzschaltbilder zu herkömmlichen elektrischen Bauelementen,

Fig. 13-16      die schematischen Ersatzschaltbilder der Fig. 9-12 mit zusätzlich eingezeichneten Induktivitäten,

Fig. 17         ein Messbeispiel zum Vergleich der Ersatzschaltbilder des erfindungsgemäßen Bauelements der Fig. 10 mit dem des herkömmlichen Bauelements der Fig. 12,

Fig. 18         eine zu Fig. 17 entsprechendes Beispiel einer Simulation,

Fig. 19         ein Simulationsbeispiel zur Durchschlagsleistung zum Vergleich der Ersatzschaltbilder des erfindungsgemäßen Bauelements der Fig. 10 mit dem des herkömmlichen Bauelements der Fig. 12,

Fig. 20         ein Simulationsbeispiel zur Durchschlagsleistung an der Grenze der Löschbedingung zum Vergleich der Ersatzschaltbilder des erfindungsgemäßen Bauelements der Fig. 10 mit dem des herkömmlichen Bauelements der Fig. 12,

Fig. 21         ein Simulationsbeispiel zur Durchschlagsleistung bei größerer Versorgungsspannung zum Vergleich der Ersatzschaltbilder des erfindungsgemäßen Bauelements der Fig. 10 mit dem des herkömmlichen Bauelements der Fig. 12,

Fig. 22         ein Simulationsbeispiel zur Löschgrenze bei größerer Versorgungsspannung zum Vergleich der Ersatzschaltbilder des erfindungsgemäßen Bauelements der Fig. 10 mit dem des herkömmlichen Bauelements der Fig. 12,

Fig. 23         ein Simulationsbeispiel zur überschrittenen Löschgrenze zum Vergleich der Ersatzschaltbilder des erfindungsgemäßen Bauelements der Fig. 10 mit dem des herkömmlichen Bauelements der Fig. 12, und

Fig. 24         ein schematisches Ablaufdiagramm eines Ausführungsbeispiels des erfindungsgemäßen Verfahrens zum Steuern eines elektrischen Bauelements.

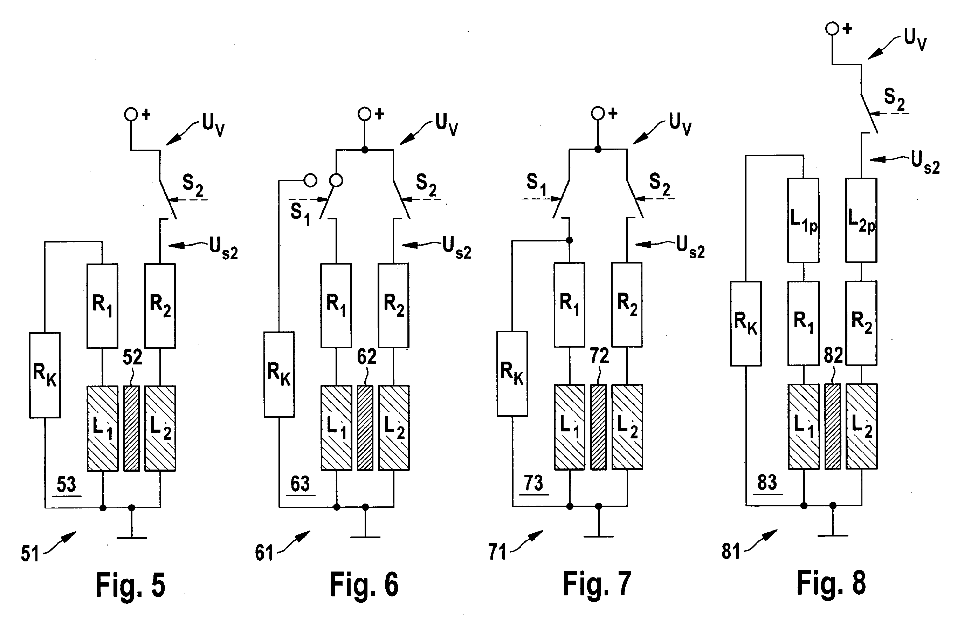

In Fig. 5 ist eine schematische Ansicht eines ersten Ausführungsbeispiels des erfindungsgemäßen elektrischen Bauteils 51 dargestellt. Das elektrische Bauteil 51 hat einen Kern 52, eine um den Kern 52 angeordnete erste Wicklung $L_1$, $R_1$, und eine um den Kern angeordnete zweite Wicklung $L_2$, $R_2$. Die zweite Wicklung $L_2$, $R_2$ ist mittels eines Schalters $S_2$ ein- und ausschaltbar. An dem elektrischen Bauelement 51 liegt die Versorgungsspannung $U_v$ an. Beim Abschalten der zweiten Wicklung $L_2$, $R_2$ fällt an dem Schalter $S_2$ die Schalterspannung $U_{S2}$ ab.

Des Weiteren hat das elektrische Bauelement 51 einen Löschkreis 53 aus der Induktivität $L_1$ der ersten Wicklung, dem Widerstand $R_1$ der ersten Wicklung und einem Schließwiderstand $R_K$. Damit wird die erste Wicklung $L_1$, $R_2$ bei einem Abschalten der zweiten Wicklung $L_2$, $R_2$ mittels des Schalters $S_2$ über den Löschkreis 53 zum Löschen der induktiven Last der zweiten Wicklung $L_2$, $R_2$ kurzgeschlossen.

Das in Fig. 6 dargestellte elektrische Bauelement 61 mit dem Kern 62, der ersten Wicklung $L_1$, $R_1$ und der zweiten Wicklung $L_2$, $R_2$ unterscheidet sich von dem Ausführungsbeispiel der Fig. 5 in der Ausgestaltung des Löschkreises und in dem Vorsehen eines weiteren Schalters $S_1$. Der Löschkreis 63 der Fig. 6 ist als eine Parallelschaltung der ersten Wicklung $L_1$, $R_1$ und des Schließwiderstandes $R_K$ zwischen dem weiteren Schalter $S_1$ zum Schalten der ersten Wicklung $L_1$, $R_1$ und Masse ausgebildet. Damit kann auch die erste Wicklung $L_1$, $R_1$ nicht nur als Löschwicklung für die zweite Wicklung $L_2$, $R_2$ dienen, sondern auch als eigenständige Arbeitswicklung.

Des Weiteren zeigt Fig. 7 das elektrische Bauelement 71, bei welchem die weitere Arbeitswicklung $L_1$, $R_1$ als Löschwicklung über dem Parallelwiderstand $R_K$ arbeitet. Dabei ist der Löschkreis 73 des elektrischen Bauteils 71 der Fig. 7 aus $R_1$, $L_1$ und $R_K$ gebildet.

Das Ausführungsbeispiel der Fig. 8 unterscheidet sich dahingehend von dem der Fig. 7, dass bei dem elektrischen Bauteil 81 gegenüber dem elektrischen Bauteil 71 weiter zusätzliche Induktivitäten $L_{1p}$ und $L_{2p}$ eingezeichnet sind. Diese zusätzlichen Induktivitäten $L_{ip}$ und $L_{2p}$ geben die in der Realität auftretenden Induktivitäten aufgrund von Streuflüssen und der vorhandenen Leitungen wieder.

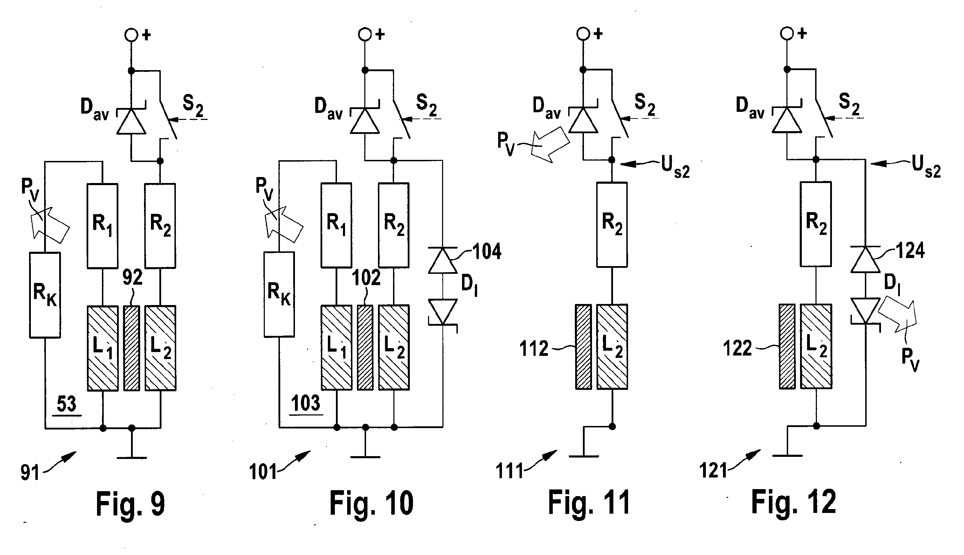

Die Fig. 9 zeigt ein schematisches Ersatzschaltbild zum erfindungsgemäßen Bauteil 51 der Fig. 5. Dabei entspricht das elektrische Bauteil 91 der Fig. 9 dem elektrischen Bauteil 51 der Fig. 5, wobei eine Zener-Diode $D_{av}$ als Abbildung der an dem Schalter S2 auftretenden Durchschlagsspannung abgebildet ist. Die Durchschlagsleistung ist mit $P_v$ bezeichnet.

Weiter zeigt Fig. 10 ein schematisches Ersatzschaltbild für das Bauelement 101 zum erfindungsgemäßen elektrischen Bauelement nach der Fig. 6. Entsprechend der Fig. 9 sind Zener-Dioden $D_{av}$ und $D_{loesch}$ eingezeichnet.

Des Weiteren hat das Bauteil 101 der Fig. 10 eine Freilaufdiode 104. Weiter zeigt Fig. 10 ein Ersatzschaltbild mit einer parallelen Löschbeschaltung 103 für die erste Wicklung $L_1$, $R_1$ und $L_2$, $R_2$.

Zum Vergleich hierzu zeigen die Fig. 11 und 12 schematische Ersatzschaltbilder für herkömmliche elektrische Bauelemente 111 und 112, bei welchen beim Schaltvorgang jeweils eine Durchschlagsspannung $P_v$ an der jeweiligen Zener-Diode $D_{av}$ auftritt.

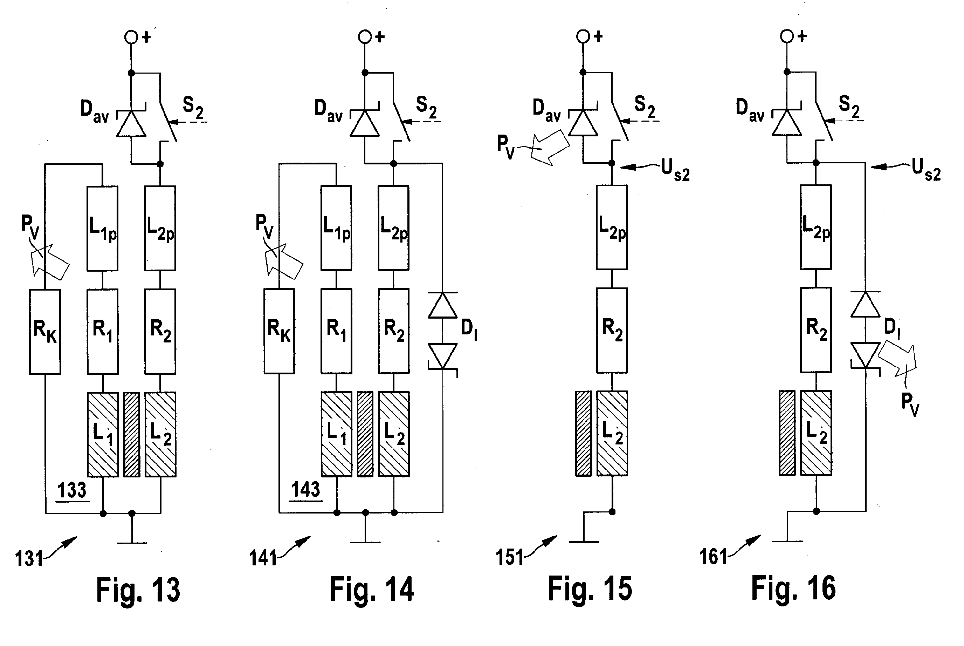

Die Fig. 13-16 zeigen schematische Ersatzschaltbilder der Fig. 9-12 mit zusätzlich eingezeichneten Induktivitäten $L_{1p}$ und $L_{2p}$, die insbesondere die tatsächlich vorhandenen Leitungsinduktivitäten wiedergeben. Dabei zeigen die Fig. 13-16 die Möglichkeit der Verschiebung oben beschriebener Löschbedingung aufgrund der parasitär auftretenden Induktivitäten $L_{ip}$, $L_{2p}$.

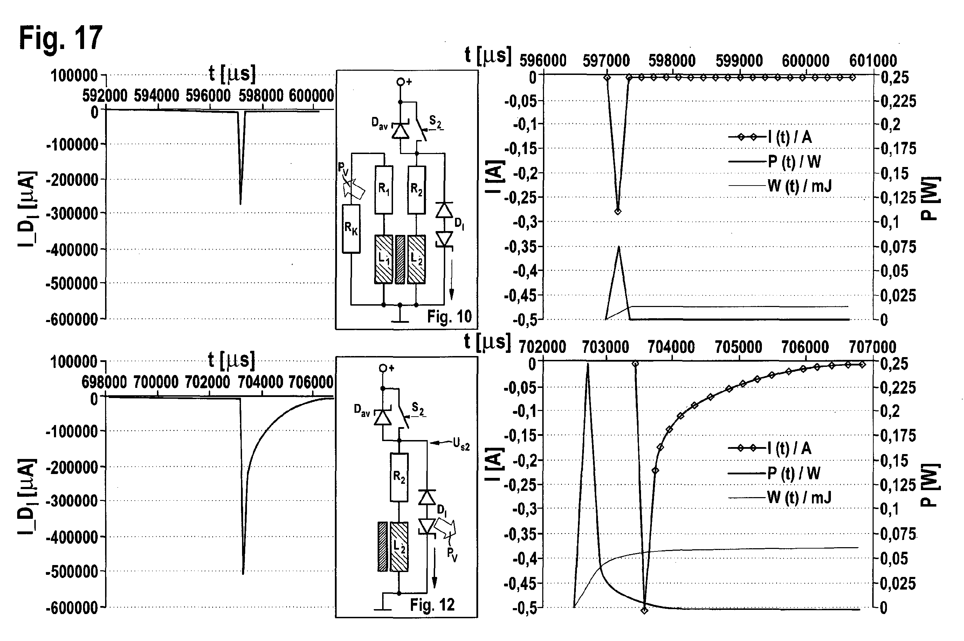

In Fig. 17 ist ein Messbeispiel zum Vergleich der Ersatzschaltbilder des erfindungsgemäßen Bauelements der Fig. 10 mit dem des herkömmlichen Bauelements der Fig. 12 dargestellt. Im Detail zeigt Fig. 17 ein Messbeispiel eines Starterrelais mit separat angesteuerten Wicklungen einer Doppelwicklung. Strom, Spannung und Verlustleistung in dem Freilaufpfad sind oben (Bereich der Fig. 10) mit und unten (Bereich der Fig. 12) ohne Löschwicklung aufgezeichnet. Die Löschleistung der Freilaufdiode 104 bzw. 124 (siehe Fig. 10 und 12) ist mit Löschwicklung nur gering. Damit ist die Wirksamkeit der Löschwicklung $R_2$, $L_2$ gezeigt. Ohne Freilauf wäre die Durchschlagsspannung $V_{av}$ höher und es könnte vollständig über die Löschwicklung $L_1$, $R_2$ gelöscht werden.

Für die Fig. 17 sind die Werte wie folgt gewählt: $U_v$ = 1,5 V, $R_1$ = 1,4 Ω, $n_1$ = 110, $R_2$ = 2,8 Ω, $n_2$ = 150, $R_K$ = 0, $U_d$ = 0,7 V.

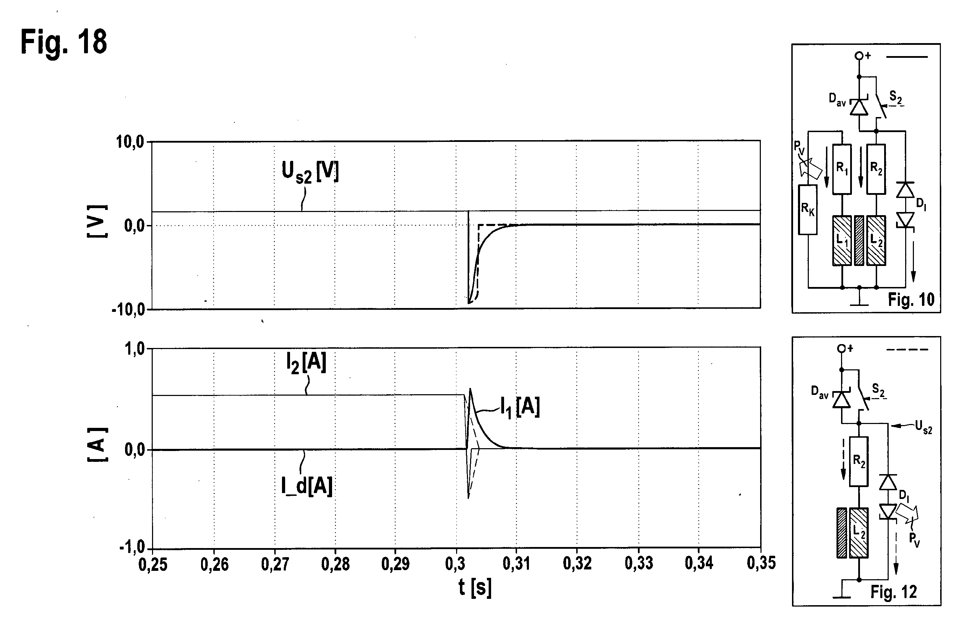

Ein entsprechendes Simulationsbeispiel mit zusätzlicher Zener-Diode ist in Fig. 18 dargestellt. Dadurch kann der Schließwiderstand oder Kurzschlusswiderstand $R_K$ noch vergrößert werden.

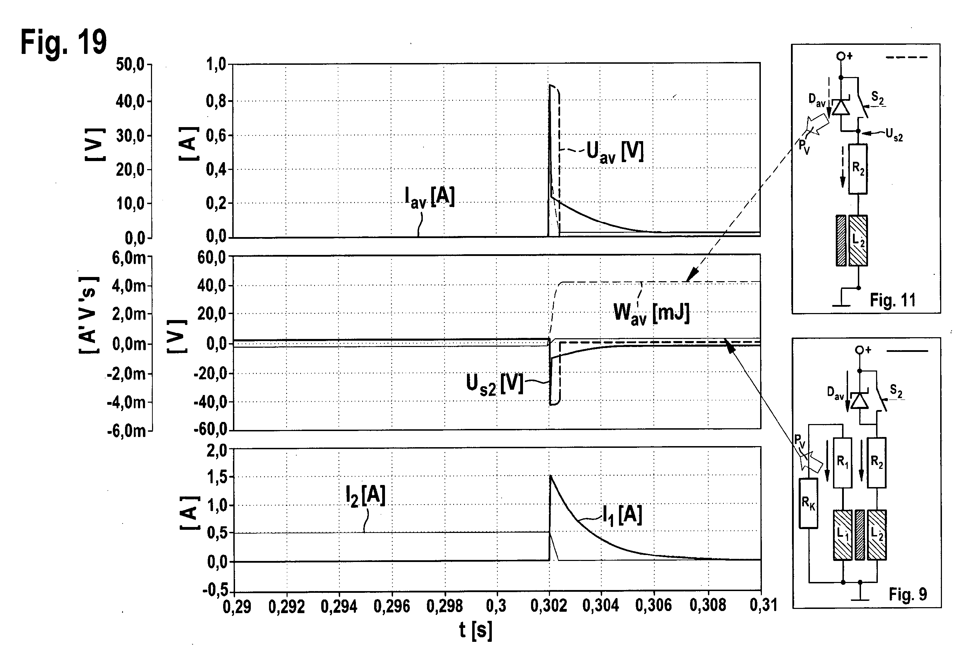

Weiter zeigt Fig. 19 ein Simulationsbeispiel zur Durchschlagsleistung mit Löschwicklung gemäß Fig. 10 und ohne Löschwicklung gemäß Fig. 12. Die mit Bezug zu Fig. 12 dargestellte gestrichelte Linie zeigt, dass eine Lichtbogenspannung bzw. eine Avalanche-Spannung ohne Löschpfad auftritt. Des Weiteren zeigt Fig. 19, dass die Wirkung des Löschpfades um so besser ist, je höher die Durchschlagsspannung $V_{av}$ ist, denn durch die höhere Durchschlagsspannung $V_{av}$ arbeitet die Löschwicklung in Fig. 10 mit Bezug zu Fig. 19 ohne Freilaufpfad sehr effektiv. Es müssen lediglich parasitäre Induktivitäten mit geringem Energiegehalt am Schalter $S_2$ gelöscht werden.

Für Fig. 19 sind die Werte wie folgt gewählt: $U_v$ = 1,5 V, $R_1$ = 1,4 Ω, $n_1$ = 110, $R_2$ = 2,8 Ω, $n_2$ = 150, $R_k$ = 1 Ω, $U_{av}$ = 50 V.

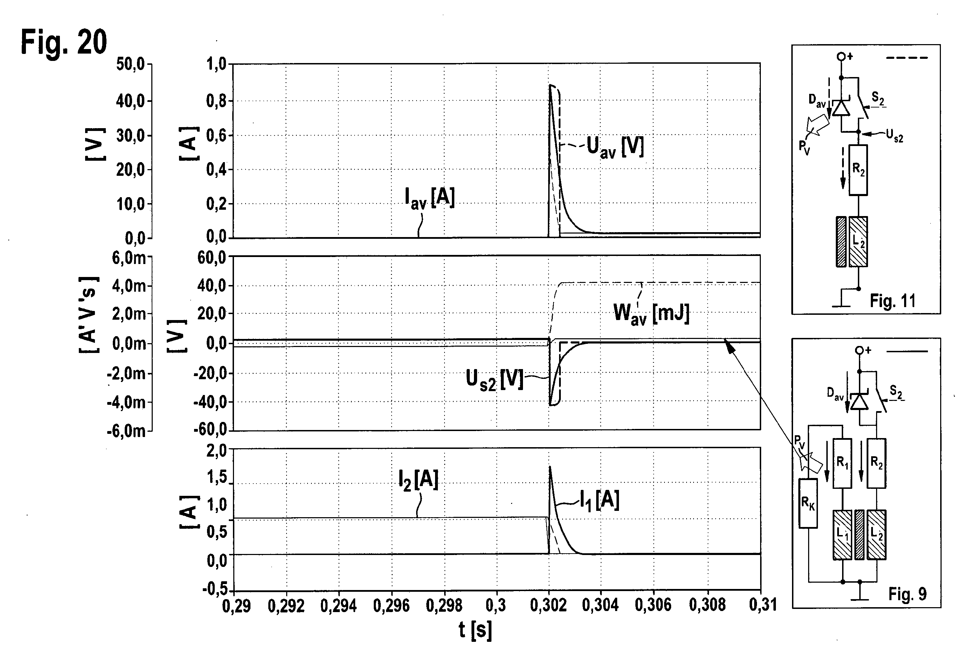

Fig. 20 zeigt ein Simulationsbeispiel zur Durchschlagsspannung an der Grenze der Löschbedingung. Dabei zeigt die Fig. 20, dass durch die höhere Durchschlagsspannung die Abklingzeitkonstante $\tau = L_1 / (R_{k+r1})$ verringert werden kann. Dabei ist hier der Grenzfall für die Löschung hauptsächlich über die Löschwicklung dargestellt.

Für Fig. 20 sind die Werte wie folgt gewählt: $U_v$ = 1,5 V, $R_1$ = 1,4 Ω, $n_1$ = 110, $R_2$ = 2,8 Ω, $n_2$ = 150, $R_K$ = 10 Ω, $U_{av}$ = 50V.

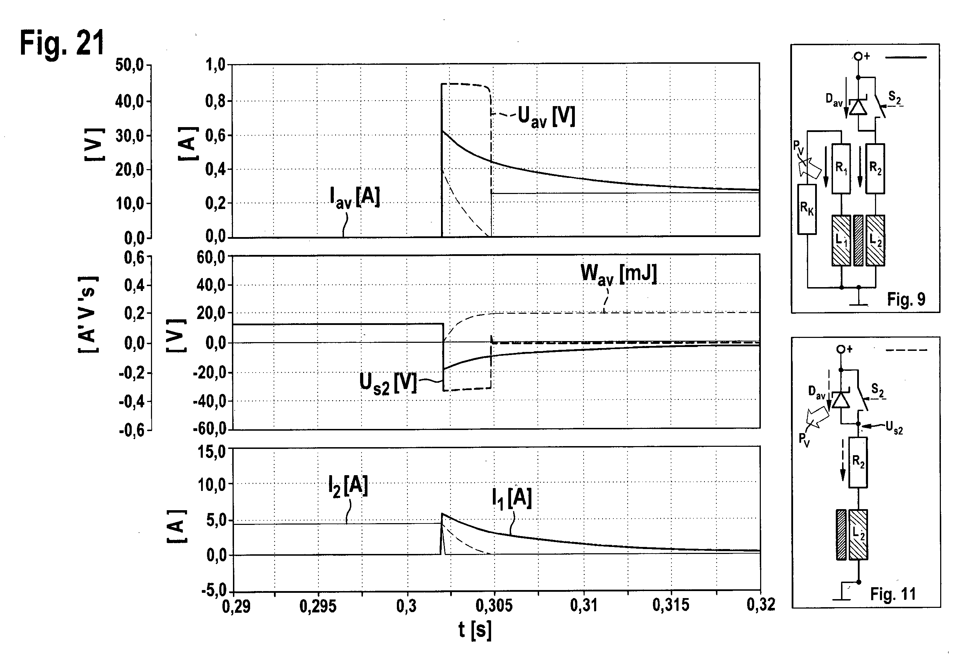

Ferner zeigt Fig. 21 ein Simulationsbeispiel zur Durchschlagsleistung bei größerer Versorgungsspannung $V_v$. Dabei zeigt Fig. 21 insbesondere, dass mit wachsender Versorgungsspannung $V_v$ die Abklingzeitkonstante $\tau$ vergrößert werden muss. Dann wird vollständig über die Löschwicklung gelöscht.

Für die Fig. 21 sind die Werte wie folgt gewählt: $U_v$ = 12,5 V, $R_1$ = 1,4 Ω, $n_1$ = 110, $R_2$ = 2,8 Ω, $n_2$ = 150, $R_k$ = 1 Ω, $U_{av}$ = 50 V.

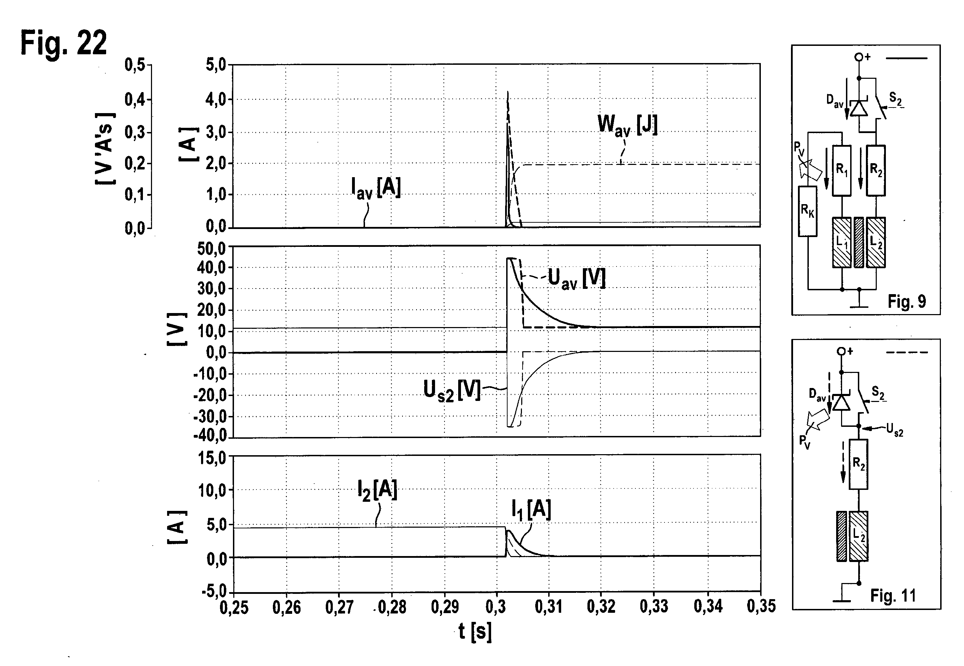

Weiterhin zeigt Fig. 22 ein Simulationsbeispiel zur Löschgrenze bei größerer Versorgungsspannung. Bei diesem Grenzfall wird hauptsächlich über die Löschwicklung gelöscht.

Für Fig. 22 sind die Werte wie folgt gewählt: $U_v$ = 12,5 V, $R_1$ = 1,4 Ω, $n_1$ = 110, $R_2$ = 2,8 Ω, $n_2$ = 150, $R_K$ = 5

$\Omega$, $U_{av}$ = 50 V. Damit ergibt sich ein rechnerischer Wert von $R_k$ < 4,76 $\Omega$.

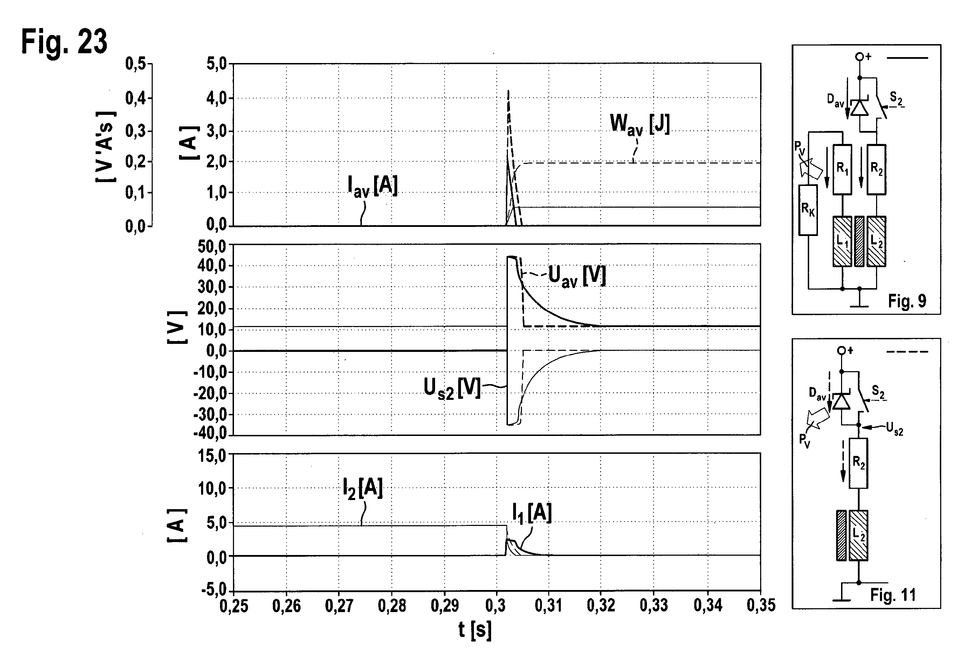

Fig. 23 zeigt ein Simulationsbeispiel zur überschrittenen Löschgrenze. Dabei zeigt Fig. 23 im Detail, dass bei weiter erhöhtem Schließwiderstand $R_K$ im Löschkreis ohne weiter verringerter Abklingzeitkonstante die Löschwirkung abgeschwächt wird. Mit anderen Worten kann bei einem zu großen Schließwiderstand $R_K$ die Zeitkonstante $\tau$ zu klein gewählt werden, so dass am Schalter $S_2$ ein Durchschlag erfolgen kann.

Für Fig. 23 sind die Werte wie folgt gewählt: $U_v$ = 12,5 V, $R_1$ = 1,4 $\Omega$, $n_1$ = 110, $R_2$ = 2,8 $\Omega$, $n_2$ = 150, $R_K$ = 10 $\Omega$, $U_{av}$ = 50 V.

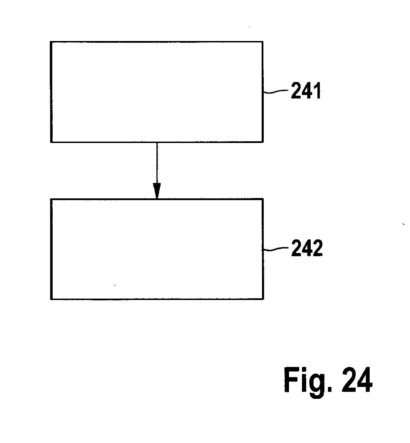

Fig. 24 zeigt ein schematisches Ablaufdiagramm eines Ausführungsbeispiels des erfindungsgemäßen Verfahrens zum Steuern eines elektrischen Bauelements 51. Das Ausführungsbeispiel der Fig. 24 hat die Verfahrensschritte 241 und 242 und wird mit Bezug zu Fig. 5 erläutert:

Verfahrensschritt 241:

Ein elektrisches Bauelement 51 wird bereitgestellt, welches einen Kern 52, eine erste Wicklung $L_1$, $R_1$, eine zweite Wicklung $L_2$, $R_2$ und einen Schalter $S_2$ zum Ein- und Ausschalten der zweiten Wicklung $L_2$, $R_2$ aufweist.

Verfahrensschritt 242:

Die erste Wicklung $L_1$, $R_1$ wird über einen Löschkreis 53 zum Löschen der induktiven Last der zweiten Wicklung $L_2$, $R_2$ bei einem Abschalten der zweiten Wicklung $L_2$, $R_2$ kurzgeschlossen.

**Patentansprüche**

1. Elektrisches Bauelement (51-101, 131, 141) mit:

   einem Kern (52-102, 132, 142), einer um den Kern angeordneten ersten Wicklung ($L_1$, $R_1$) und einer um den Kern angeordneten zweiten Wicklung ($L_2$, $R_2$), welche mittels eines Schalters ($S_2$) schaltbar ist, **dadurch gekennzeichnet, dass**
   die erste Wicklung ($L_1$, $R_1$) bei einem Abschalten der zweiten Wicklung ($L_2$, $R_2$) über einen Löschkreis (53, 103, 133, 143) zum Löschen der induktiven Last der zweiten Wicklung ($L_2$, $R_2$) kurzschließbar ist.

2. Bauelement nach Anspruch 1, wobei die zweite Wicklung ($L_2$, $R_2$) als Arbeitswicklung des Bauelementes ausgebildet ist und die erste Wicklung ($L_1$, $R_1$) als Löschwicklung zum Löschen der induktiven Last der Arbeitswicklung ($L_2$, $R_2$) ausgebildet ist.

3. Bauelement nach Anspruch 1 oder 2, wobei der Löschkreis (53-103, 133, 143) als ein Kurzschlusskreis aus einer Serienschaltung der ersten Wicklung ($L_1$, $R_1$) mit einer bestimmten Wicklungszahl ($n_1$), mit einer bestimmten Induktivität ($L_1$) und mit einem bestimmten Widerstand ($R_1$) und eines Schließwiderstandes ($R_K$) ausgebildet ist.

4. Bauelement nach einem der vorstehenden Ansprüche, wobei die erste Wicklung ($L_1$, $R_1$) als eine zu der zweiten Wicklung ($L_2$, $R_2$) separat ausgebildete Blindwicklung auf dem gemeinsamen Kern (52-102, 132, 142) angeordnet ist.

5. Bauelement nach einem der vorstehenden Ansprüche, wobei der Löschkreis (63-103, 133, 144) als eine Parallelschaltung der ersten Wicklung ($L_1$, $R_2$) und eines Schließwiderstandes ($R_K$) zwischen einem weiteren Schalter ($S_1$) zum Schalten der ersten Wicklung ($L$, $R_2$) und Masse ausgebildet ist.

6. Bauelement nach einem der vorstehenden Ansprüche, wobei der weitere Schalter ($S_1$) dazu eingerichtet ist, die erste Wicklung ($L_1$, $R_1$) bei einem Abschalten der zweiten Wicklung ($L_2$, $R_2$) mittels des Schalters ($S_2$) einzuschalten.

7. Bauelement nach einem der vorstehenden Ansprüche, wobei die erste Wicklung ($L_1$, $R_1$) bei einem Anschalten mittels des weiteren Schalters ($S_1$) als Arbeitswicklung arbeitet.

8. Bauelement nach einem der vorstehenden Ansprüche, wobei das Verhältnis zwischen den Widerständen ($R_1$, $R_2$) und den Windungszahlen ($n_1$, $n_2$) der ersten und zweiten Wicklung ($L_1$, $R_1$; $L_2$, $R_2$) in Abhängigkeit der am elektrischen Bauelement anliegenden Versorgungsspannung ($V_v$) und einer Durchschlagsspannung ($U_{av}$) des Schalters ($S_2$) der zweiten Wicklung ($L_2$, $R_2$) derart eingestellt wird, dass die Durchschlagsspannung ($U_{av}$) kleiner als eine Differenzspannung zwischen der Versorgungsspannung ($V_v$) und der beim Schaltvorgang am Schalter ($S_2$) abfallenden

Schalterspannung ($U_{S2}$) ist.

9.  Bauelement nach Anspruch 8, wobei das Verhältnis die Bedingung erfüllt:

$$(R_K + R_1) * n_2 / n_1 > (U_{av} - U_v)/ I_2,$$

wobei $R_1$ den Widerstand der ersten Wicklung, $n_1$ die Windungszahl der ersten Wicklung, $n_2$ die Windungszahl der zweiten Wicklung, $R_K$ den Schließwiderstand des Löschkreises, $U_v$ die Versorgungsspannung, $U_{av}$ die Durchschlagsspannung des Schalters ($S_2$) der zweiten Wicklung ($L_2$, $R_2$) und $I_2$ den durch den Widerstand ($R_2$) der zweiten Wicklung ($L_2$, $R_2$) fließenden Strom bezeichnet.

10. Bauelement nach einem der vorstehenden Ansprüche, wobei das Bauelement als ein Elektromagnet, als ein Relais, insbesondere als ein Schalt- und Einrückrelais, oder als ein Transformator ausgebildet ist.

11. Bauelement nach einem der vorstehenden Ansprüche, wobei der jeweilige Schalter ($S_1$, $S_2$) als ein Feldeffekttransistor ausgebildet ist.

12. Starter für ein Kraftfahrzeug, mit:

einem elektrischen Bauelement (51-101, 131, 141) nach einem der vorstehenden Ansprüche.

13. Verfahren zum Steuern eines elektrischen Bauelements (51-101, 131, 141) mit einem Kern (52-102, 132, 142), einer um den Kern angeordnete erste Wicklung ($L_1$, $R_2$), einer um den Kern angeordneten zweiten Wicklung ($L_2$, $R_2$) und einem Schalter ($S_2$) zum Schalten der zweiten Wicklung ($S_2$), **gekennzeichnet durch** das Kurzschließen der ersten Wicklung ($L_1$, $R_2$) über einen Löschkreis (53-103, 133, 143) zum Löschen der induktiven Last der zweiten Wicklung ($L_2$, $R_2$) bei einem Abschalten der zweiten Wicklung ($L_2$, $R_2$).

**Claims**

1.  Electrical component (51-101, 131, 141) having:

a core (52-102, 132, 142), a first winding ($L_1$, $R_1$) arranged around the core and a second winding ($L_2$, $R_2$) arranged around the core, which second winding is switchable by means of a switch ($S_2$),
**characterized in that**,
in the case of disconnection of the second winding ($L_2$, $R_2$), the first winding ($L_1$, $R_1$) can be short-circuited via a quenching circuit (53-103, 133, 143) for quenching the inductive load of the second winding ($L_2$, $R_2$).

2.  Component according to Claim 1, wherein the second winding ($L_2$, $R_2$) is in the form of a main winding of the component and the first winding ($L_1$, $R_1$) is in the form of a quenching winding for quenching the inductive load of the main winding ($L_2$, $R_2$) .

3.  Component according to Claim 1 or 2, wherein the quenching circuit (53-103, 133, 143) is in the form of a shorted circuit comprising a series circuit composed of the first winding ($L_1$, $R_1$), having a particular number of turns ($n_1$), having a particular inductance ($L_1$) and having a particular resistance ($R_1$), and a closing resistor ($R_K$).

4.  Component according to one of the preceding claims, wherein the first winding ($L_1$, $R_1$) is arranged as a dummy winding, formed separately from the second winding ($L_2$, $R_2$), on the common core (52-102, 132, 142).

5.  Component according to one of the preceding claims, wherein the quenching circuit (53-103, 133, 143) is in the form of a parallel circuit comprising the first winding ($L_1$, $R_1$) and a closing resistor ($R_K$) between a further switch ($S_1$) for switching the first winding ($L_1$, $R_1$) and earth.

6.  Component according to one of the preceding claims, wherein the further switch ($S_1$) is set up to switch on the first winding ($L_1$, $R_1$) when the second winding ($L_2$, $R_2$) is disconnected by means of the switch ($S_2$).

7. Component according to one of the preceding claims, wherein the first winding ($L_1$, $R_1$) operates as the main winding when connected by means of the further switch ($S_1$).

8. Component according to one of the preceding claims, wherein the relationship between the resistances ($R_1$, $R_2$) and the numbers of turns ($n_1$, $n_2$) of the first and second windings ($L_1$, $R_1$; $L_2$, $R_2$) is adjusted on the basis of the supply voltage ($U_v$) applied to the electrical component and a breakdown voltage ($U_{av}$) of the switch ($S_2$) of the second winding ($L_2$, $R_2$) such that the breakdown voltage ($U_{av}$) is smaller than a differential voltage between the supply voltage ($U_v$) and the switch voltage ($U_{S2}$) which drops across the switch ($S_2$) during the switching process.

9. Component according to Claim 8, wherein the relationship fulfils the condition:

$$(R_K + R_1) * n_2/n_1 > (U_{av} - U_v)/I_2,$$

wherein $R_1$ denotes the resistance of the first winding, $n_1$ denotes the number of turns of the first winding, $n_2$ denotes the number of turns of the second winding, $R_K$ denotes the closing resistance of the quenching circuit, $U_v$ denotes the supply voltage, $U_{av}$ denotes the breakdown voltage of the switch ($S_2$) of the second winding ($L_2$, $R_2$), and $I_2$ denotes the current flowing through the resistance ($R_2$) of the second winding ($L_2$, $R_2$).

10. Component according to one of the preceding claims, wherein the component is in the form of an electromagnet, a relay, in particular a switching and starter relay, or a transformer.

11. Component according to one of the preceding claims, wherein the respective switch ($S_1$, $S_2$) is in the form of a field-effect transistor.

12. Starter for a motor vehicle, having:

an electrical component (51-101, 131, 141) according to one of the preceding claims.

13. Method for controlling an electrical component (51-101, 131, 141) having a core (52-102, 132, 142), a first winding ($L_1$, $R_1$) arranged around the core, a second winding ($L_2$, $R_2$) arranged around the core and a switch ($S_2$) for switching the second winding ($L_2$, $R_2$), **characterized by** short-circuiting of the first winding ($L_1$, $R_1$) via a quenching circuit (53-103, 133, 143) for quenching the inductive load of the second winding ($L_2$, $R_2$) in the case of disconnection of the second winding ($L_2$, $R_2$).

## Revendications

1. Composant électrique (51-101, 131, 141) présentant une âme (52-102, 132, 142), un premier enroulement ($L_1$, $R_1$) disposé autour de l'âme et un deuxième enroulement ($L_2$, $R_2$) disposé autour de l'âme et apte à être commuté au moyen d'un commutateur ($S_2$),
**caractérisé en ce que**
le premier enroulement ($L_1$, $R_1$) peut être mis en court-circuit par l'intermédiaire d'un circuit d'extinction (53-103, 133, 143) en vue d'éteindre la charge inductive du deuxième enroulement ($L_2$, $R_2$) lors du débranchement du deuxième enroulement ($L_2$, $R_2$).

2. Composant selon la revendication 1, dans lequel le deuxième enroulement ($L_2$, $R_2$) est configuré comme enroulement de travail du composant et le premier enroulement ($L_1$, $R_1$) comme composant d'extinction destiné à éteindre la charge inductive de l'enroulement de travail ($L_2$, $R_2$).

3. Composant selon les revendications 1 ou 2, dans lequel le circuit d'extinction (53-103, 133, 143) est configuré comme boucle de court-circuit constituée du raccordement en série du premier enroulement ($L_1$, $R_1$) qui compte un nombre défini de spires ($n_1$) et dont l'inductance ($L_1$) et la résistance ($R_1$) sont définies, et d'une résistance de fermeture ($R_k$).

4. Composant selon l'une des revendications précédentes, dans lequel le premier enroulement ($L_1$, $R_1$) est disposé

sur l'âme commune (52-102, 132, 142) comme enroulement aveugle formé séparément du deuxième enroulement $(L_2, R_2)$.

5. Composant selon l'une des revendications précédentes, dans lequel le circuit d'extinction (53-103, 133, 143) est configuré comme raccordement en parallèle du premier enroulement $(L_1, R_1)$ et d'une résistance de fermeture $(R_k)$ entre un premier commutateur $(S_1)$ de raccordement du premier enroulement $(L_1, R_1)$ et la masse.

6. Composant selon l'une des revendications précédentes, dans lequel l'autre commutateur $(S_1)$ est conçu pour brancher le premier enroulement $(L_1, R_1)$ au moyen du commutateur $(S_2)$ lors du débranchement du deuxième enroulement $(L_2, R_2)$.

7. Composant selon l'une des revendications précédentes, dans lequel le premier enroulement $(L_1, R_1)$ travaille comme enroulement de travail lors du branchement au moyen de l'autre commutateur $(S_1)$.

8. Composant selon l'une des revendications précédentes, dans lequel le rapport entre les résistances $(R_1, R_2)$ et les nombres de spires $(n_1, n_2)$ du premier et du deuxième enroulement $(L_1, R_1; L_2, R_2)$ est ajusté en fonction de la tension d'alimentation $(U_v)$ appliquée sur le composant électrique et d'une tension de claquage $(U_{av})$ du commutateur $(S_2)$ du deuxième enroulement $(L_2, R_2)$, de telle sorte que la tension de claquage $(U_{av})$ soit plus petite que la différence entre la tension d'alimentation $(U_v)$ et la tension $(U_{S2})$ aux bornes du commutateur $(S_2)$ lors de l'opération de commutation .

9. Composant selon la revendication 8, dans lequel le rapport vérifie la condition :

$$(R_k + R_1) * n_2/n_1 > (U_{av} - U_v)/I_2,$$

dans laquelle $R_1$ représente la résistance du premier enroulement, $n_1$ le nombre de spires du premier enroulement, $n_2$ le nombre de spires du deuxième enroulement, $R_k$ la résistance de fermeture du cycle d'extinction, $U_v$ la tension d'alimentation, $U_{av}$ la tension de claquage de commutateur $(S_2)$ du deuxième enroulement $(L_2, R_2)$ et $I_2$ le courant qui traverse la résistance $(R_2)$ du deuxième enroulement $(L_2, R_2)$.

10. Composant selon l'une des revendications précédentes, le composant étant configuré comme électroaimant, comme relais et en particulier comme relais de commutation et d'engagement, ou comme transformateur.

11. Composant selon l'une des revendications précédentes, dans lequel chaque commutateur $(S_1, S_2)$ est configuré comme transistor à effet de champ.

12. Démarreur pour véhicule automobile, présentant un composant électrique (51-101, 131, 141) selon l'une des revendications précédéntes.

13. Procédé de commande d'un composant électrique (51-101, 131, 141) présentant un noyau (52-102, 132, 142), un premier enroulement $(L_1, R_1)$ disposé autour du noyau et un deuxième enroulement $(L_2, R_2)$ disposé autour du noyau ainsi qu'un commutateur $(S_2)$ qui commute le deuxième enroulement $(L_2, R_2)$,
**caractérisé par**
la mise en court-circuit du premier enroulement $(L_1, R_1)$ lors du débranchement du deuxième enroulement $(L_2, R_2)$ par l'intermédiaire d'un circuit d'extinction (53-103, 133, 143) qui éteint la charge inductive du deuxième enroulement $(L_2, R_2)$ .

Fig. 1

Fig. 2

Fig. 3

Fig. 4

**Fig. 5**  **Fig. 6**  **Fig. 7**  **Fig. 8**

EP 2 524 388 B1

Fig. 9

Fig. 10

Fig. 11

Fig. 12

Fig. 16

Fig. 15

Fig. 14

Fig. 13

Fig. 17

Fig. 18

EP 2 524 388 B1

Fig. 19

Fig. 20

Fig. 11

Fig. 9

Fig. 21

Fig. 9

Fig. 11

EP 2 524 388 B1

Fig. 22

Fig. 9

Fig. 11

**Fig. 23**

EP 2 524 388 B1

241

242

**Fig. 24**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5909352 A